# EUROPEAN PATENT APPLICATION

(11) **EP 1 710 737 A1**
(43) Date of publication of application: **11.10.2006**
(21) Application number: 04802604.1
(22) Date of filing: 31.12.2004
(51) Int. Cl.: G06Q 10/00

(54) **A SAFE NETWORK PAYMENT SYSTEM AND SAFE NETWORK PAYMENT AUTHENTICATION METHOD**

(30) Priority: 31.12.2003 CN 200310121630
(71) Applicant: China Unionpay, Pudong, Shanghai 200122 (CN)
(72) Inventor: PENG, Guilin, Pudong, Shanghai 200122 (CN); KANG, Jianming, Pudong, Shanghai 200122 (CN); WEI, Gang, Changsha, Hunan 410011 (CN); YAO, Jiaxian, Pudong, Shanghai 200122 (CN); WANG, Nan, Pudong, Shanghai 200122 (CN); ZHANG, Lili, Pudong, Shanghai 200122 (CN); LIANG, Jian, Pudong, Shanghai 200122 (CN)
(74) Representative: Thum, Bernhard
(86) International application number: PCT/CN2004/001592
(87) International publication number: WO 2005/064503

(57) **Abstract**

An online payment system and a secure authentication method, including a customer, a merchant and a payment gateway connected over Internet; said payment gateway is responsible for processing payment information from the network, authenticating identities of the customer and the merchant and validating the validity of transaction; after a processing system in the payment gateway confirms the transaction is valid, said payment gateway sends a payment request and informs the two parties in the transaction of the payment information after the payment is accomplished; an assistant customer identity authentication system is arranged between the payment gateway and the customer, which connects the customer to the payment gateway in a non-Internet approach; the payment gateway generates an authorization code dynamically and transfers it to the customer via the assistant customer identity authentication system; the customer enters the authorization code on correct page in the payment gateway to pass identity authentication. The authentication method and the payment system greatly reduce the possibility that online data is stolen, by using both Internet and non-Internet authentication mode, and thereby improves security of online payment and delivers flexibility and convenience.

## Description

### Field of the Invention

The invention relates to a secure online payment authentication method and a secure online payment system that utilizes said method.

### Background of the Invention

In recent years, e-business has become the main trend in development of Internet-based economy, and online shopping payment has become a convenient life style gradually. A key link in e-business is the payment settlement system, and online payment is the ideal payment solution for e-business.

At present, major online payment means include bank card, electronic check, and electronic wallet, etc.; wherein, bank card is the most widely used payment means.

The online payment system disclosed in the invention mainly involves bank account-based payment means (e.g., bank card) and a payment method that accomplishes e-business transactions over Internet.

The key challenge in online payment is security.

E-business must be undertaken in a secure environment, which involves three implications:

1. Data security

The online transaction data must not be intercepted and stolen and there by embezzled illegally in the transmission process.

2. Data integrity

The online transaction data must not be modified, lost so as to be distorted in the transmission process.

3. Authenticity of subjects

Online transactions must be made on condition that the consumer involved in the transaction is right the legal card holder or the owner of the bank account, and the vendor is a legal merchant.

Online payment faces the following challenges:

Security and integrity of transaction data

The transaction data is transferred over Internet, which is an open network; therefore, the transaction data may be intercepted, stolen, or tampered, and thereby used illegally.

Authentication of subjects of transaction

In the traditional online payment process, the card holder is usually not authenticated, and the consumer can complete a transaction successfully merely by entering the credit card ID and the expiration date; since both the card ID and the expiration date are not confidential, they can be embezzled easily. As the result, it is inevitable there are more and more online payment fraud cases.

In order to solve the above problems, diverse security authentication means are invented, mainly including the following technical means:

Secure Socket Layer (SSL) encryption mechanism

SSL is an encryption algorithm. It is a secure data transmission protocol over network issued originally by Netscape, with the main purpose to provide a secret and reliable connection between the two parties involved in communication. SSL handshake protocol enables the server and the customer to authenticate each other with a specific encryption algorithm before data transmission. The advantage of SSL lies in: it is an independent application protocol, on which higher levels of protocols can be established.

Most Web Servers and Browsers support SSL-based encrypted data transmission. Therefore, with this feature, partial web pages of confidential nature can be set in encrypted transmission mode, so as to prevent the data from being intercepted by any third party when the data is transmitted over the network. SSL utilizes a public key encryption technique (RSA) as the protocol for encrypted data communication between the customer and the server. Presently, most Web Servers and Browsers use SSL technology. For consumers, SSL has solved most of the problems. However, for e-business, the problems are not solved completely, because SSL can only ensure data security, but the vendor can't determine the actual provider of the data; even though the data provider can be ascertained, there is still a problem regarding settlement with the bank.

Secure Electronic Transaction (SET) specification

In 1996, SET is developed by MasterCard International, Visa International, and American Express International, together with IBM. SET is a perfect technical product, and specifies authentication with digital certificate for the card holder, merchant, and bank. SET utilizes RSA secure public key encryption technique, featured with data security, integrity, and identifiability and non-repudiation of data source. It provides the standard for protecting consumers in payment for online transactions with credit card over Internet.

SET involves Electronic Wallet, Merchant Server, Payment Gateway, and Certification Authority (CA), which constitute SET-compliant authorized transactions with credit card over Internet.

SET is used from the commercial site to the commercial bank through the browser at the customer in secure online payment system with electronic bank card. The online bank uses existing programs and equipments to identify the credit card and settle the consumer's bank account, so as to complete the transaction. SET ensures security of the entire payment process by concealing the credit card ID. To this end, SET must ensure the credit card holder is connected persistently to the bank in the existing system over the network. SET creates a complete solution for using credit cards in different systems. Due to its reliable identity authentication, SET is an excellent online payment system. It ensures each legal participant in the transaction possesses a legal identity and the identity verification for the card holder is performed by the bank. Of course, there are other services involved, such as identity authentication and customer service, etc. It is the method of establish another reliable customer connection. In addition, it can facilitate arbitration in case of any dispute.

To authenticate with the certificate, the certificate software must be installed on the computer of the object to be authenticated; such an approach is viable to authenticate the merchant; however, that approach will bring inconvenience when it is used to authenticate the card holder, because many online shoppers may not always use a fixed computer to access Internet.

Therefore, the solution has the following drawbacks:

(1) Under SET protocol standard, the merchants around the world have to be certified in certification authorities, and the consumers have to obtain electronic certificates from the certification authorities, which brings severe inconvenience to the consumers.

(2) Under SET protocol standard, the merchants have to install complex software on their servers, and the consumers have to install complex software on the PCs, in order to make e-business transactions and store electronic certificates; as the result, the consumers will be frustrated.

(3) Due to the fact that the electronic certificate of a consumer has to be installed on a fixed PC, the card holder's e-business transactions have to be made through that PC, which causes severe limitations to the e-business.

(4) Since the electronic certificate has to be installed on the consumer's network access device, it is impossible to make e-business transactions with network access devices on which an electronic certificate can't be installed, such as mobile telephones and PDAs, etc.

(5) In micro-transactions, the consumer's cost for the transaction is even higher than the value of the transaction; therefore, the consumer has no impetus to use SET protocol in micro-transactions.

3D SET standard

3D SET standard is put forth on the basis of SET, with the following improvement:

1)Under 3D SET, the consumer is not required to install complex software on his/her PC (or any other Internet access device) to make e-business transactions and store electronic certificate.

2) In a 3D SET environment, the consumer can make e-business transactions and obtain certification from the card issuer through any network access device instead of merely through a PC, since the consumer is not required to store electronic certificate on a PC.

However, the 3D SET standard still has the following defects:

1)Similar to other certificate-based authentication methods, it requires the consumer to possess electronic certificates from card issuing authorities for all his/her bank cards. Since a consumer usually possesses more than one bank cards on hand, it is troublesome for the consumer to obtain electronic certificates from corresponding card issuing authorities for all these cards.

2)Since the consumer can make e-business transactions through any network access device, certificate-based authentication is unnecessary and troublesome when compared to password-based authentication.

3) 3D SET is not compatible to SSL. Due to the fact that SSL is well recognized and widely used in data transmission for online payment in actual e-business, SSL often is the de-facto standard for e-business; therefore, it is difficult to generalize the application of 3D SET.

Visa 3D Secure system

In 2001, the Visa international credit organization put forth Visa 3D Secure system.

Visa's 3D is not merely a payment and authentication method or a technical scheme; virtually, Visa 3D Secure is a complete secure online payment authentication system. In this payment authentication system, it is required to authenticate the card holder (by the card issuer) and the merchant (by the acquirer).

The word "3D" in 3D Secure is the abbreviation of "3 Domains", i.e., three domains. The three domains are: Issuer Domain (including the card holders and the card issuers), Acquirer Domain (including the merchants and their acquiring entity), and Interoperability Domain (Visa).

The obvious advantages are:

1)It minimizes the requirement for hardware/software of the card holder participating in e-business. The card holder is only required to have a computer installed with a browser (for example, IE) to access the network.

2) Compared to SET standard, Visa 3D Secure system only requires the merchant to authenticate the card holder but doesn't require the card holder to authenticate the merchant. The identity of the merchant is authenticated by a CA that is certified by Visa with the certificate.

3)It substitutes certificate-based authentication with password-based authentication, and thereby significantly simplifies the authentication procedures.

The drawbacks include:

Since 3D Secure system employs an "authentication + CA" network architecture, several procedures has to be added in each transaction process; therefore, the transaction process will spend more time.

The card holder has to fill all detailed transaction information; when the card holder makes transactions at multiple merchants, the card holder has to enter password for each transaction.

In this authentication scheme, the card issuer has to install complex server to support online transactions, so as to provide registration and authentication services for card holders.

Visa 3D Secure system employs a centralized network architecture, and all authenticators require intervention of Visa Directory; viewed from the aspect of transaction flow, Visa Directory is not an efficient technical scheme: it delays the information flow and requires additional information transfer procedures, and thereby finally affect the entire transaction flow, and is subject to attacks from hackers; the authentication mechanism also employs a SSL encrypted data transmission protocol. Due to the fact that the card holder authorization process is separated from the certification process, fraudulent merchants can control MPI easily to obtain card holder information illegally, viewed from the authentication process. To prevent about fraud, 3D Secure requires the merchant to obtain a digital certificate from a CA that is certified by Visa, which, of course, enhances security of the 3D Secure system, but causes increased complexity in operation of the 3D Secure system.

In conclusion, the defects in traditional or existing online payment security systems include:

SSL

Though SSL implements point-to-point secure data transmission and ensures integrity and security of data transmission, SSL doesn't support authentication of the subjects involved in transactions and provide no means to authenticate legality of identities of the subjects; therefore, online payment can not be secured merely with SSL.

However, SSL is a matured technology in itself and has been widely used. All other technologies that occurred subsequently, including SET, 3D SET, and the latest 3D Secure system, embed SSL encryption technology in their kernels.

SET

The worst defect in SET lies in the severe dependence to certificate-based authentication, mainly the certificate-based authentication method for card holders. Since the card holders are highly distributed, mobile, and numerous, though the card holders can be fixed and authenticated in e-business by means of issuing certificates to card holders, it is impracticable in practice.

3D SET

3D SET is a defective authentication system essentially because it inherits the defect of certificate-based authentication for card holders in SET; in addition, another apparent defect in 3D SET system is the incompatibility to SSL.

3D Secure

3D Secure has a blind spot behind its ostensible perfection, i.e. , the password-based authentication mechanism will fail in case the card ID and the password are embezzled illegally. In addition, the card holder, merchant, card issuer, and acquirer have to carry out technical renovation and upgrade in part or in all, in order to support normal operation of the authentication system.

### Summary of the Invention

The invention aims to provide a secure online payment authentication method and a secure online payment system, which are secure enough to prevent the customer's important information (banking information, e.g., credit card ID) from being intercepted by other people in the network as well as have high processing efficiency and require low cost; in addition, the authentication method is convenient and especially provides a convenient experience to the customer and the merchant in transaction activities.

Through analysis of above existing techniques, we can conclude:

SSL encrypted data transmission protocol is a proven technique and still can be utilized;

The certificate-based authentication scheme for card holders is perfect theoretically but has a poor feasibility in practice;

Substituting transparent data transmission with encrypted data transmission is an effective security measure, and the tractions will be more secure if the information of card holder can be isolated from the merchant and the acquirer;

The merchant, the acquirer, and the card issuer shall be authenticated with certificates objectively and appropriately.

The present invention provides a secure online payment authentication method and a secure online payment system with the following technical schemes:

An online payment system in an aspect of the present invention, including:

customer, i.e., the buyer, which is the party that a certain amount of money will be deducted from his/her account to pay a merchant;

the customer's bank of account or agency bank, i.e., the party that can confirm the customer's account information and execute deduction for payment;

merchant, i.e., the service provider or merchandise provider, which is the party that will collect the payment;

the merchant's bank of collecting account or agency bank, which is the party that can confirm the merchant's account information and receive payment from the customer, also referred to as the payee's bank of account;

a payment gateway, which is a system responsible for handling payment information from the network, authenticating the customer and the merchant, and confirming authenticity and validity of a transaction;

the customer, the merchant, and the payment gateway being connected to each other over Internet; after the processing system of the payment gateway confirms legality of the transaction, the payment gateway sending a payment request, and, after the payment is completed, informing the two parties (i.e., customer and merchant) involved in the transaction of the payment information;

the payment gateway communicating with the customer and the merchant at one side to authenticate identity of the customer and identity of the merchant (password-based identity authentication for the customer, and certificate-based identity authentication for the merchant) and confirming the transaction and transaction value; and the payment gateway communicating with the bank of paying account and the bank of collecting account at the other side, to transfer payment request and deduction information;

in order to ensure security of transaction and prevent the transaction information and relevant identity information and bank' s information from intercepted illegally over the network, an assistant customer identity authentication system is provided between the payment gateway and the customer; said assistant authentication system connects the customer to the payment gateway through a non-Internet approach; after the payment gateway confirms the customer's identity preliminarily with password and receives the payment request over Internet, it generates an authorization code and sends the authorization code to the customer via the assistant customer identity authentication system; after the customer receives the authorization code, the customer enters the authorization code on the correct page in the payment gateway; after the payment gateway verifies the authorization code, the payment gateway confirms the customer identity, sends the payment information to the bank, obtains the processing information from the bank, and forwards the processing information to the customer and the merchant.

Said assistant customer identity authentication system includes a customer terminal and an switch system; said customer terminal has its initial information registered in the payment gateway; said switch system connects said customer terminal to said payment gateway, and receives information from said payment gateway and forwards the information to said customer terminal.

Said switch system is available in different types, and the specific type is chosen by the payment gateway in accordance with said customer terminal. The information received by said switch system from said payment gateway includes authorization code and transaction information.

Said authorization code is generated dynamically and has a validity period; it is deemed as valid only when it is inputted on the correct page in the payment gateway within the validity period; otherwise it will be deemed as invalid.

Said customer terminal of the assistant customer identity authentication system is a dedicated device, and has its initial information registered in the payment gateway.

Said customer terminal can be a dedicated device separately configured and provided by the payment gateway provided that it conforms to the standard of the payment gateway; or, said customer terminal can be a dedicated card provided by the payment gateway and inserted in a personal or home electronic or electrical device, such as a STB or a remote controller.

Of course, the customer terminal of said assistant customer identity authentication system can be a non-dedicated device, such as a telephone, a mobile telephone, a BP, or a PDA, etc. ; before said non-dedicated device is used as the customer terminal, it shall have its initial information registered in the payment gateway or a place designated by the payment gateway.

The initial information of said customer terminal registered in the payment gateway may be one or more information of the customer terminal. Said customer terminal that is used to receive the authorization code may not be a customer terminal with initial information registered in the payment gateway.

In the online payment system, there is arranged a bank's information processing system between the payment gateway and the bank; said bank's information processing system is connected to the payment gateway, the payer's bank of account, and the payee's bank of account; the payment gateway sends the payment request to said bank's information processing system to verify the payer's account can be used in the payment, obtains the processing result (successful deduction or payment rejection) of the payment request from the system.

Said payment gateway and said bank's information processing system can be network platforms provided by the same entity or different entities.

Said bank's information processing system can be a network platform provided by the payer' s bank of account or a network platform provided by the payee's bank of account or agency bank.

Said payment gateway and said bank's information processing system can be network platforms provided by a third party irrelevant to the transactions.

In another aspect of the present invention, there is provided an online payment authentication method that employs the online payment system provided in the invention, includes authenticating the two parties (i.e., the customer and the merchant) involved in the online transaction, and verifying the transaction and transaction value; wherein dynamic assistant identity authentication for the customer is also performed, besides the certificate-based identity authentication for the merchant and the password-based identity authentication for the customer.

After the customer browses the web pages provided by the merchant and submits a transaction request and the merchant receives that transaction request, the online payment authentication method provided in the invention will begin. Specifically, said method includes the following steps:

the customer initiating a payment request on a web page provided by the merchant and entering into the interface of the payment gateway;

the payment gateway requesting the customer to enter his/her online PIN and password for online payment over Internet for customer identity authentication and verifying said password;

when the password for online payment is incorrect, the payment gateway rejecting the payment request; when the password for online payment is correct, the payment gateway generating an authorization code dynamically and going to the next procedure;

the payment gateway sending the authorization code to the customer via the assistant customer identity authentication system;

the customer entering the authorization code on the correct page in the payment gateway after he/she receives the authorization code;

the payment gateway confirming the customer identity has passed the authentication after it verifies the authorization code successfully and then sending a payment request.

In the above steps, said assistant customer identity authentication system forwards the authorization code to the customers is performed through a non-Internet approach.

when a mobile telephone is chose as the customer terminal and a SMS is chose as the switch system for the assistant authentication system, the online payment authentication method in another aspect of the present invention includes the following steps:

the customer sending a payment request on a web page provided by the merchant and entering into the interface of the payment gateway of the online payment system, choosing SMS-based authentication as the assistant identity authentication mode , and entering the mobile telephone number and the specified password for online payment at the prompt on the interface;

when receiving the customer information, the payment gateway judging the mobile telephone number and the password for online payment; if said mobile telephone number has initial information registered in the payment gateway and the password is correct, the payment gateway generating a authorization code dynamically;

the payment gateway sending said authorization code and the customer's mobile telephone number to the SMS center;

the SMS center sending the received authorization code to the customer's mobile telephone;

when receiving the short message, the customer entering the authorization code on the payment page at the prompt on the page;

after verifying the authorization code successfully, the payment gateway deeming the customer's identity has passed the authentication and executing the subsequent payment procedures.

The authorization code is generated dynamically, with a validity period; it must be inputted within the specified validity period.

The payment gateway sends said authorization code to the customer (i.e., the customer terminal) via the assistant customer identity authentication system; said customer terminal can be a customer terminal with initial information registered in the payment gateway or a customer terminal chosen or specified by the customer.

The information received by said switch system from said payment gateway includes authorization code and transaction information. Likewise, the information sent to the customer can include authorization code and transaction information.

The switch system can use existing facilities, such as telecom networks and CATV networks, etc.

The customer terminal of said assistant customer identity authentication system can be a dedicated device separately configured or configured in any other electronic or electrical device such as a STB or a remote controller; or, the customer terminal of said assistant customer identity authentication system can be a non-dedicated device, such as a telephone, a mobile telephone, or a PDA; however, before the non-dedicated device is used as the customer terminal, it shall have its initial information registered in the payment gateway or a place designated by the payment gateway.

### Detailed Description of the Embodiments

In order to describe the invention better, the following terms or phrases used in the online payment system according to the embodiments of the present invention are defined first:

Customer - buyer, i.e., the purchasing party in e-business, the bank card holder, and the online payment initiating party.

Payment gateway - it is an information transform system between Internet and the internal transaction processing system of bank (i.e. , bank's information processing system), mainly responsible for processing payment information from Internet. It may be a public platform or a dedicated platform provided by an switch system, or a platform provided by a bank, or a platform provided by an agent bank.

Card issuing bank - the card issuing bank performs verification and financial processing for the bank card payment information from the customer via the payment gateway and returns the processing result. It includes the payee's bank of account or the payer's bank of account. Narrowly spoken, it is the bank card-issuing bank; broadly spoken, it can be any form of bank of account.

Online merchant - an e-business enterprise that provides merchandise or services and receive payment in the form of bank card over Internet; the online merchant can be directly connected to the payment gateway of the card issuer, or connected to the gateway of the card issuer via a payment agency.

Payment agency - a professional entity that provides payment collection service over Internet to online merchants. If the card issuing banks maintain their payment gateways respectively, the payment agency can be connected to the payment gateways of multiple or even all card issuing banks to support payment with different bank cards and settle with the card issuing banks on behalf of the merchants; if there is no such a payment agency, a merchant has to connect to multiple card issuing banks to support payment with different bank cards; if the payment gateway is provided by a third party and is connected to bank's information processing systems of multiple or all card issuing banks, the payment agency takes the same role as the payment gateway. In this invention, the role of the payee's bank of account or the payer's bank of account can be substituted by the payment agency.

Bank of settlement of online merchant - the bank of account of online merchant, which provides financial settlement service to the merchant.

Certification Authority (CA) - CA is an authority established to verify identity and standing of the parties involved in e-business transactions, to protect transaction security, and to provide essential guarantee for normal operation of e-business transaction activities.

Online payment mainly involves the following links:

The customer submits an order to an online merchant over the network; after the payment is confirmed, the customer and the online merchant enter into the online payment process, which mainly includes 4 links:

Customer authentication - due to the fact that most online payments are transactions without card or magnetic strip, how to solve the customer identity authentication problem is an important link in online payments.

Order confirmation - it is a required link for online payment, involving merchant authentication.

Withdraw (or authorized deduction) by the card issuer - after the customer and the order are confirmed, the card issuer can perform withdraw (or authorized deduction) from the customer's account. The completion of withdraw (or authorized deduction) by the card issuer indicates successful online payment; then, the merchant can provide the specified merchandise or service to the customer.

Settlement with merchant - the bank of settlement of the merchant transfer fund to the merchant.

Hereunder the system composition according to embodiments of the invention is detailed.

An online payment system, including:

customer, i.e., the buyer, which is the party that a certain amount of money will be deducted from his/her account;

the customer's bank of account or agency bank, which is the party that can confirm the customer's account information and deduct money from the customer's account, also referred to as the payer's bank of account;

merchant, i.e., the service provider or merchandise provider, which is the party that will collect the payment;

the merchant' s bank of collecting account or agency bank, which is the party that can confirm the merchant's account information and receive payment from the customer, also referred to as the payee's bank of account;

payment gateway, which is a system responsible for handling payment information from the network, authenticating the customer and the merchant, and confirming authenticity and validity of the transactions;

the customer, the merchant, and the payment gateway are connected to each other over Internet; after the processing system of the payment gateway confirms legality of the transaction, the payment gateway sends a payment request, and, after the payment is completed, informs the two parties (i.e., customer and merchant) involved in the transaction payment of the payment information;

the payment gateway communicates with the customer and the merchant at one side to authenticate identity of the customer and identity of the merchant (password-based identity authentication for the customer, certificate-based identity authentication for the merchant), and confirms the transaction and transaction value; the payment gateway communicates with the bank of paying account and the bank of collecting account at the other side, to transfer payment request and deduction information;

In order to ensure security of transaction and prevent the transaction information and relevant identity information and bank's information from intercepted illegally over the network, an assistant customer identity authentication system is provided between the payment gateway and the customer; said assistant authentication system connects the customer to the payment gateway through a non-Internet approach. Said assistant customer identity authentication system includes a customer terminal and an switch system; said customer terminal has its initial information registered in the payment gateway; said switch system connects the customer terminal to the payment gateway, and receives information from the payment gateway and forwards the information to the customer terminal.

Before the customer can make online transactions, the customer has to have his/her initial information registered in the payment gateway, i.e., the mapping information between customer identity and customer account as well as the basic information of the customer have to be registered; the payment gateway has other information stored in database or in other recording means, for example, the mapping information between customer account and the customer's bank of account, etc.; the customer can make online transactions with his/her actual identity or the identity for online transaction (i.e., online PIN) mapped to his/her actual identity. Before the payment gateway handles the transaction request, it verifies whether the customer's identity provided over the network has been registered in it; if the customer's identity provided over the network is correct, the payment gateway will deem that the customer has passed the preliminary customer authentication and permits the online transaction. In addition, the payment gateway can request the customer to enter the password for online payment as specified in the registration of initial information after it verifies the customer's identity, so as to confirm the customer's identity has passed the preliminary authentication. The customer can provide a password for online payment for a dedicated customer terminal through the dedicated customer terminal (i.e., the payment gateway or an entity certified by the payment gateway), or specify a password for online payment when the customer makes an initial information registration at a place designated by the payment gateway. Said password can be modified by the customer.

After the customer registers the initial information in the payment gateway, he/she can begin to make online transactions conveniently and securely. If the customer has specified a password for online payment, he/she can use the password for preliminary identity authentication at the time of customer identity authentication. In this way, the entering of bank card ID or any other account ID or corresponding password on the interface over Internet can be avoided during online transactions. That means the customer's actual identity is "shielded" and the customer's actual bank data is protected.

After the payment gateway authenticates the customer's identity preliminarily with the password and receives the payment request over Internet, it generates an authorization code, and sends the authorization code to the customer via the assistant customer identity authentication system; after the customer receives that authorization code, the customer can enter the authorization code on the correct page in the payment gateway; after verifying the authorization code successfully, the payment gateway confirms the customer has passed the identity authentication, sends the payment information, obtain the processing result from the bank, and forwards the processing result to the customer and the merchant.

Wherein, the above authorization code is generated dynamically, and the generation rules can be adjusted by the payment gateway in real time. In the payment gateway, the rules themselves are variable dynamically and have certain validity periods. The authorization code can also be configured with a certain validity period as required. In this way, both the authorization code and the generation rules are variable dynamically, with validity periods; in addition, the authorization code is transmitted through a non-Internet approach, and the receiving terminal for the authorization code usually can't be obtained easily by others; therefore, security of online transactions can be ensured.

According to an embodiment of the present invention, in the above system, the customer terminal that receives the authorization code can be specified; for example, a customer can register several records during registration of initial information in the payment gateway, and, during the transaction process, the customer can specify to send the authorization code to a specific customer terminal, so as to minimize the possibility of stealing the authorization code by others.

After the customer browses the web pages provided by the merchant and submits a transaction request and the merchant receives that transaction request, the online payment authentication method described in the invention will begin. Specifically, said method according to an embodiment of the present invention includes the following steps:

The customer initiating a payment request on a web page provided by the merchant and entering into the interface of the payment gateway;

The payment gateway requesting the customer to enter his/her online PIN and password for online payment over Internet for customer identity authentication and verifying said password;

If the password for online payment is incorrect, the payment gateway rejecting the payment request; if the password for online payment is correct, the payment gateway generating an authorization code dynamically and it proceeding to the next step;

The payment gateway sending the authorization code to the customer via the assistant customer identity authentication system;

The customer entering the authorization code on the correct page in the payment gateway after he/she receives the authorization code;

The payment gateway confirming the customer identity has passed the authentication after it verifies the authorization code successfully and then sending a payment request;

Above payment request being sent to the bank's information processing system to complete the payment request.

Said assistant customer identity authentication system forwards the authorization code to the customers through a non-Internet approach.

After the payment gateway sends the payment request to the bank's information processing system, the bank's information processing system will execute payment operations and feed back the result to the payment gateway.

In the above steps, the online PIN is a code representing the customer identity for online payment, set by the customer in the payment gateway in advance; the password for online payment is a password set for authenticating the online PIN; generally spoken, the password shall be distinguished from the customer's account password, so as to enhance security.

When a mobile telephone is used as the customer terminal and a SMS is used as the switch system for the assistant authentication system, the online payment authentication method according to an embodiment of the present invention includes the following steps:

The customer sending a payment request on a web page provided by the merchant and entering into the interface of the payment gateway of the online payment system, choosing the assistant identity authentication as SMS-based authentication, and entering the mobile telephone number and the specified password for online payment at the prompt on the interface;

When receiving the customer information, the payment gateway judging the mobile telephone number and the password for online payment; if said mobile telephone number has initial information registered in the payment gateway and the password is correct, the payment gateway generating an authorization code dynamically.

The payment gateway sending said authorization code and the customer's mobile telephone number to the SMS center;

The SMS center sending the received authorization code to the customer's mobile telephone;

When receiving the short message, the customer entering the authorization code on the payment page at the prompt on the page;

After verifying the authorization code successfully, the payment gateway deeming the customer's identity has passed the authentication and it proceeding to the payment procedure.

The authorization code is generated dynamically, with a validity period; the authorization code must be inputted within the specified validity period.

The payment gateway sends said authorization code to the customer (i.e., the customer terminal) via the assistant customer identity authentication system; said customer terminal may be a customer terminal with its initial information registered in the payment gateway or a customer terminal chosen or specified by the customer. For example, a mobile telephone is usually chosen as the customer terminal for receiving the dynamic authorization code, whereas a BP or any other device can be used.

In that way, during an online transaction, the mobile telephone number is used as the customer's PIN, as indicated in the registration of initial information, so that it is unnecessary to provide the customer's actual PIN or bank card ID over the network, and thereby the security is enhanced; in addition, the password-based authentication approach is flexible and convenient, and can meet the demands of the consumers.

The information received by said switch system from said payment gateway can include authorization code and transaction information. Likewise, the information sent to the customer can include authorization code and transaction information. In addition, the short message containing the authorization code can be sent and received in the general encryption mode or re-encryption mode of the switch system.

The switch system can use existing facilities, such as telecom networks and CATV networks, etc.

In the above embodiment, the architecture of the online payment system provided in the invention is as follows: it involves two physical platforms: one is a platform on Internet; the other is a telecom SMS platform.

The system includes the following components: customer (i.e., card holder or buyer), online merchant, payment gateway, bank's information processing system, the payer's bank of account or agency bank" SMS center, and short message receiving terminal - mobile telephone.

Wherein, the customer, online merchant, payment gateway, bank's information processing system, the payer's bank of account and the payee's bank of account are connected over Internet; however, the customer and the merchant can only access or communicate with the payment gateway, but can't connect the bank's information processing system; the bank's information processing system is connected to the payment gateway, the payer's bank of account, and the payee's bank of account. The payment gateway sends payment requests to the bank's information processing system and obtains the processing result from that system; in this embodiment, the payment gateway is not connected directly to the bank.

The customer terminal of said assistant customer identity authentication system can be a dedicated device separately configured or configured in any other electronic or electrical device such as a STB or a remote controller; or, the customer terminal of said assistant customer identity authentication system can be a non-dedicated device, such as a telephone, a mobile telephone, a BP, or a PDA; however, before the non-dedicated device is used as the customer terminal, it shall have its initial information registered in the payment gateway or a place specified by the payment gateway.

In above assistant authentication system, a telecom SMS platform is used as the switch system, which authenticates the merchant with certificate and authenticates the customer in two times: one is authentication with the password; the other is authentication with the dynamic authorization code.

The service flow of the online payment system according to an embodiment of the invention can be as follows:

Service flow 1

The customer chooses merchandise at the merchant's website and creates an order, and submits a payment request;

The customer enters into the payment page of the online payment system, chooses payment with mobile telephone; the page prompts the customer to enter the mobile telephone number and the password for online payment, and sends the mobile telephone number and the password for online payment to the payment gateway;

When receiving the customer's information, the payment gateway judges the mobile telephone number and the password for online payment; if said mobile telephone number has initial information registered in the payment gateway, the payment gateway generates an authorization code that is unpredictable, and composes a short message containing the authorization code and the payment amount;

The payment gateway sends the short message to the SMS center;

The SMS center forwards the short message to the customer's mobile telephone;

When receiving the short message, the customer verifies the payment amount and enters the authorization code on the payment page at the prompt on the page;

The payment gateway verifies the authorization code, and then sends the information to the transaction processing system of the payer's bank of account after successful verification.

The transaction processing system executes the deduction request, and then return the processing result to the payment gateway;

The payment gateway forwards the processing result to the merchant and the customer.

Service flow 2

The card holder chooses merchandise at the merchant's website and creates an order;

When the customer chooses the payment mode as "payment with bank card + authentication with short message", the customer enters into the payment page of the online payment system, and enters the mobile telephone number and the password for online payment at the prompt on the page;

When receiving the customer's information, the payment gateway judges the mobile telephone number and the password for online payment; if said mobile telephone has been costumed, the payment gateway generates an authorization code;

The payment gateway sends said authorization code and the payment amount to the SMS center;

The SMS center forwards the received authorization code and payment amount to the customer's mobile telephone;

When receiving the short message, the customer verifies the payment amount and enters the mobile telephone number and authorization code on the payment page at the prompt on the page;

The payment gateway verifies the authorization code, and then sends the deduction information to the bank's information processing system after successful verification;

The bank's information processing system sends a deduction request to the payer's bank of account;

The payer's bank of account deducts the amount from the customer's account, and returns the processing result to the bank's information processing system;

The bank's information processing system returns the processing result to the payment gateway;

The payment gateway records the transaction result and forwards the transaction result to the merchant; after receiving the notification for successful payment, the merchant provide the specified merchandise or service to the card holder.

The above authentication method according to the embodiment of the present invention has the following advantages:

The "mobile telephone short message" authentication mode for online payment effectively avoids illegal online transactions in case the card ID and the password are intercepted, and thereby effectively protects benefit of the cardholder. Since the card holder has to pass the two-stage authentication with password and authorization code contained in the mobile telephone short message, the identity authenticity of the cardholder can be ensured.

In the "mobile telephone short message" authentication mode, the parties involved in online payment needn't to perform large-scale technical renovation or upgrade; as the result, from the viewpoint of economical efficiency, such an authentication mode is easy to use and low in cost.

In the "mobile telephone short message" authentication mode for online payment, on one hand, the SSL encryption technique is still used in the technical plane; at the other hand, it eliminates the drawback of certificate-based authentication for the card holder, and eliminates the possibility that the card holder's confidential information is obtained by the merchant or even the acquirer.

The present invention solves the problem regarding security in online payment: viewed from data security and integrity, the "short message" authentication mode employs effective encryption technique for data transmission and effectively isolates key information in data stream from the merchant, and can prevent the key information from intercepted and illegally embezzled by network intruders;

Viewed from authenticity of subjects involved in transaction, in the "mobile telephone short message" authentication mode, the card holder is authenticated twice, which is more secure than the simple password-based authentication in 3D Secure system.

Since the customer needn't to enter credit card ID, ATM PIN, or validity period of credit card, the authenticate mode can eliminate the risk that the sensitive information is intercepted by hackers in network transmission.

To make an online transaction, the customer must enter the mobile telephone number and the dedicated service password for online payment for preliminary identity authentication and then enter the unique dynamic authorization code for online payment dynamically received with the mobile telephone for secondary authentication; even if the preliminary authentication information is intercepted, the secondary authentication information can't be intercepted because the authorization code is generated by the online payment system uniquely and sent to the customer's mobile telephone through the SMS platform instead of the network; theoretically, the bi-channel security scheme employed in the authentication mode is more secure and harder to break when compared to mono-channel security schemes, and thereby can enhance security in online payment greatly.

Such a password-based authentication mode is more flexible and easier to be accepted than the certificate-based authentication mode.

Since mobile telephone has become a popular communication utility, the authentication mode is very convenient and the operating procedures are simple and clear. The user will face a uniform payment interface during payment with different bank cards and needn't to understand different rules of the banks or master different operations. In addition, such an authentication mode can reduce the cost.

Initial registration of customer information and activation/cancellation of online payment function:

The customer can apply for activation of online payment function in the authentication mode described in the invention to the card issuing bank and specify the mobile telephone number to be bound to the bank card, and can cancel the online payment function in the same way. The system supports binding a mobile telephone number to multiple bank card IDs.

The payer's bank of account will send the information for service activation/cancellation to the payment gateway of the online payment system in real time; the system will store the information as the basis for authentication, and send an acknowledge message to the card holder.

The customer can specify the limit for each payment as well as the payment limit for each day.

The customer can apply for service activation/cancellation at the payer's bank of account in any of the following ways:

1) The customer applies at the bank's counter;

2) The customer applies over Internet;

3) The customer applies with a dedicated device, such as POS.

The customer has to specified an online PIN during the registration of initial information; said PIN may be a mobile telephone number, account ID, an ID provided by the payment gateway, or a code chosen by the customer. During the online transaction, the customer can specify the terminal the authentication code returns to after he/she passes the password authentication.

Above description is only provided to describe and facilitate understanding the technical scheme in the present invention better, but not to limit the implementation of the present invention. Those skilled in the art can easily make substitutions or modifications to the embodiments of the present invention, without departing from the spirit of the present invention; however, any of such substitutions or modifications shall fall into the scope of the present invention.

## Claims

1. An online payment system, comprising:
customer, i.e., the buyer, which is the party that a certain amount of money will be deducted from his/her account to pay a merchant,
the customer's bank of account or agency bank, i.e., the party that can confirm the customer's account information and execute deduction for payment,
merchant, i.e., the service provider or merchandise provider, which is the party that will collect the payment,
the merchant's bank of collecting account or agency bank,
a payment gateway, which is a system responsible for handling payment information from the network, authenticating the customer and the merchant, and confirming authenticity and validity of a transaction;
the customer, the merchant, and the payment gateway being connected to each other over Internet; after processing system of the payment gateway confirms legality of the transaction, the payment gateway sending a payment request, and, after the payment is completed, the payment gateway informing the two parties (i.e., the customer and the merchant) involved in the transaction of the payment information;
the payment gateway communicating with the customer and the merchant at one side to authenticate identity of the customer and identity of the merchant (password-based identity authentication for the customer, and certificate-based identity authentication for the merchant) and confirming the transaction and transaction value; and the payment gateway communicating with the bank of paying account and the bank of collecting account at the other side, to transfer payment request and deduction information;
wherein
said payment gateway has a customer information database, which stores the customer's actual identity, the customer's identity for online transaction, and the basic information of the customer's account;
there is arranged an assistant customer identity authentication system between said payment gateway and said customer, and said assistant authentication system connects said customer to said payment gateway in a non-Internet approach;
after the payment gateway verifies the customer's identity for online transactions has been logged in the customer information database (i.e., the customer's identity is valid), it generates an authorization code for the received payment request, and sends the authorization code to the customer via the assistant customer identity authentication system; after the customer receives that authorization code, the customer enter the authorization code on the correct page in the payment gateway; after verifying the authorization code successfully, the payment gateway confirms the customer has passed the identity authentication, sends the payment information, obtains the processing result from the bank, and forwards the processing result to the customer and the merchant.

2. The online payment system as in claim 1, wherein said assistant customer identity authentication system comprises a customer terminal and an switch system; said customer terminal has its initial information registered in the payment gateway; said switch system connects said customer terminal to said payment gateway, and receives information from said payment gateway and forwards the information to said customer terminal.

3. The online payment system as in claim 2, wherein the information received by said switch system from said payment gateway comprises an authorization code and transaction information.

4. The online payment system as in claim 1, wherein said authorization code is generated dynamically and has a validity period; said authorization code is deemed as valid only when it is inputted on the correct page in the payment gateway within the validity period; otherwise said authorization code will be deemed as invalid.

5. The online payment system as in claim 1 or 2, wherein said customer terminal of the assistant customer identity authentication system is a dedicated device, and has its initial information registered in the payment gateway.

6. The online payment system as in claim 5, wherein said customer terminal is a dedicated device separately configured, and is provided by said payment gateway.

7. The online payment system as in claim 5, wherein said customer terminal is a device conforming to the standard of said payment gateway.

8. The online payment system as in claim 5, wherein said customer terminal is a dedicated switching card provided by said payment gateway, and is inserted in a personal or home electronic or electrical device such as a STB or a remote controller, etc.

9. The online payment system as in claim 1 or 2, wherein the customer terminal of said assistant customer identity authentication system is a non-dedicated device, such as a telephone, a mobile telephone, a BP, or a PDA, etc.; before said non-dedicated device can be used as the customer terminal, it shall have its initial information registered in the payment gateway or a place designated by the payment gateway.

10. The online payment system as in claim 2, wherein the initial information of said customer terminal registered in the payment gateway may be one or more information of the customer terminal.

11. The online payment system as in claim 2, wherein said customer terminal that is used to receive the authorization code may not be a customer terminal with initial information registered in the payment gateway.

12. The online payment system as in claim 1, wherein there is a bank's information processing system between the payment gateway and the bank; said bank's information processing system is connected to the payment gateway, the payer' s bank of paying account or agency bank, and the payee's bank of collecting account or agency bank; the payment gateway sends the payment request to said bank's information processing system and obtains the processing result (successful deduction or payment rejection) of the payment request from said bank's information processing system.

13. The online payment system as in claim 12, wherein said payment gateway and said bank's information processing system are network platforms provided by different entities.

14. The online payment system as in claim 12, wherein said payment gateway and said bank's information processing system are network platforms provided by the same entity.

15. The online payment system as in claim 12, wherein said bank's information processing system is a network platform provided by the payer's bank of account.

16. The online payment system as in claim 12, wherein said bank's information processing system is a network platform provided by the payment collecting bank or its agency bank.

17. The online payment system as in claim 13, wherein said payment gateway and said bank's information processing system are network platforms provided by a third party irrelevant to the transaction.

18. The online payment system as in claim 1 or 12, wherein said payment gateway has a customer information database, which stores the customer's information and the customer's bank account information; the customer's identity in said customer information comprises the customer's actual identity and identity for online transactions; said identity for online transaction can be the customer's actual identity or an identity specified by the customer freely.

19. An online payment authentication method, comprising authenticating the two parties (i.e., the customer and the merchant) involved in the online transaction (certificate-based identity authentication for the merchant, and password-based identity authentication for the customer), are confirming the transaction and transaction value; wherein
said method further comprises performing a dynamic assistant identity authentication for the customer.

20. The online payment authentication method as in claim 19, wherein said method comprises the following steps:
initializing a transaction request by the customer when he/she browses on the network;
receiving, by the merchant, said transaction request;
sending, by the customer, a payment request and entering into the interface of a payment gateway;
requesting, by said payment gateway, the customer to enter his/her password for online payment over Internet for customer identity authentication and verifying said password;
when the password is incorrect, rejecting, by said payment gateway, said transaction request;
when the password is correct, generating an authorization code dynamically;
sending, by the payment gateway, the authorization code to the customer via an assistant customer identity authentication system;
entering, by the customer, the authorization code on the correct page in the payment gateway after he/she receives the authorization code;
confirming, by the payment gateway, the customer identity has passed the authentication after verifying by the payment gateway the authorization code successfully, and then sending a payment request;
wherein said step of sending by the payment gateway the authorization code to the customer via an assistant customer identity authentication system is performed through a non-Internet approach.

21. The online payment authentication method as in claim 20, wherein said step of confirming by the payment gateway the customer identity has passed the authentication after verifying by the payment gateway the authorization code successfully and then sending a payment request comprises, notifying, by said bank's information processing system, the payer's bank of account to deduct the specified payment amount, and returning the processing result to said payment gateway.

22. The online payment authentication method as in claim 20, further comprising the following steps:
choosing, by the customer, merchandise at the merchant's website and creating an order;
choosing, by the customer, "authentication with mobile telephone short message" as the assistant identity authentication mode;
entering, by the customer, into the interface of the payment gateway of the online payment system, and entering the mobile telephone number and the password for online payment at a prompt on the interface;
when receiving customer information, judging, by the payment gateway, the mobile telephone number and the password for online payment; when said mobile telephone number has initial information registered in the payment gateway and the password is correct, generating, by the payment gateway, an authorization code dynamically;
sending, by the payment gateway, said authorization code and the payment amount to SMS center;
sending, by the SMS center, the received authorization code to the customer's mobile telephone;
when receiving the short message, entering, by the customer, the authorization code on the payment page at a prompt on the page;
after verifying the authorization code successfully, deeming, by the payment gateway, the customer's identity has passed the authentication, and executing the next subsequent payment step.

23. The online payment authentication method as in claim 20 or 21, wherein said step of when the password is correct, generating an authorization code dynamically comprises, specifying a valid period for the authorization code; and the correct authorization code must be inputted within the specified validity period.

24. The online payment authentication method as in claim 20, further comprising, sending, by the payment gateway, the authorization code and the transaction information to the customer terminal via the assistant customer identity authentication system.

25. The online payment authentication method as in claim 20, wherein said step of sending by the payment gateway the authorization code to the customer via an assistant customer identity authentication system comprises sending by the payment gateway the authorization code to the customer via an assistant customer identity authentication system to the customer terminal.

26. The online payment authentication method as in claim 20, wherein in said step of sending by the payment gateway the authorization code to the customer via an assistant customer identity authentication system to the customer terminal, the customer terminal is specified by the customer.
